(19) Europäisches Patentamt
European Patent Office
Office européen des brevets

(11) **EP 2 015 493 B1**

(12) **EUROPÄISCHE PATENTSCHRIFT**

(45) Veröffentlichungstag und Bekanntmachung des Hinweises auf die Patenterteilung:
**27.02.2013 Patentblatt 2013/09**

(21) Anmeldenummer: **08011660.1**

(22) Anmeldetag: **27.06.2008**

(51) Int Cl.:
***H04L 1/00*** *(2006.01)*

(54) **Verfahren zur telegrammweisen Datenübertragung in einem seriellen Kommunikationsprotokoll sowie dieses nutzende Datenübertragungsvorrichtung**

Method for transferring data by telegram in a serial communication protocol and data transmission device using same

Procédé de transmission des données par télégramme dans un protocole de communication série ainsi que dispositif de transmission des données l'utilisant

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **13.07.2007 DE 102007032659**

(43) Veröffentlichungstag der Anmeldung:
**14.01.2009 Patentblatt 2009/03**

(73) Patentinhaber: **Knick Elektronische Messgeräte GmbH & Co. KG**
**14163 Berlin (DE)**

(72) Erfinder:
• **Fuchs, Andreas, Dipl.-Ing.**
**12205 Berlin (DE)**
• **Meske, Christoph**
**14513 Teltow (DE)**

(74) Vertreter: **Hübner, Gerd et al**
**Rau, Schneck & Hübner**
**Patentanwälte**
**Königstrasse 2**
**90402 Nürnberg (DE)**

(56) Entgegenhaltungen:
**EP-A- 0 609 595     EP-A- 1 499 024**
**DE-A1- 4 116 468**

• **BLOME W ET AL: "FELDBUS-PROTOKOLLE IM VERGLEICH. ÖENORME UNTERSCHIEDE IN DER EFFIZIENZ" ELEKTRONIK, WEKA FACHZEITSCHRIFTENVERLAG, POING, DE, Bd. 43, Nr. 1, 11. Januar 1994 (1994-01-11), Seiten 48-50,55, XP000424347 ISSN: 0013-5658**
• **CHUNLONG BAI ET AL: "WLC45-1: Turbo Coded Type-II H-ARQ Scheme with Incremental Redundancy Using Sub-Block Recovery" GLOBAL TELECOMMUNICATIONS CONFERENCE, 2006. GLOBECOM '06. IEEE, IEEE, PI, 1. November 2006 (2006-11-01), Seiten 1-5, XP031075879**

**Beschreibung**

Die Erfindung betrifft ein Verfahren zur telegrammweisen Datenübertragung in einem seriellen Kommunikationsprotokoll sowie eine dieses Verfahren nützende Datenübertragungsvorrichtung, insbesondere eine kontaktlos arbeitende Datenübertragungsvorrichtung in Mess-Systemen.

Zum Hintergrund der Erfindung ist es notwendig, zuerst auf einige Grundsätze der Datenkommunikation insbesondere bei seriellen Kommunikationsprotokollen einzugehen.

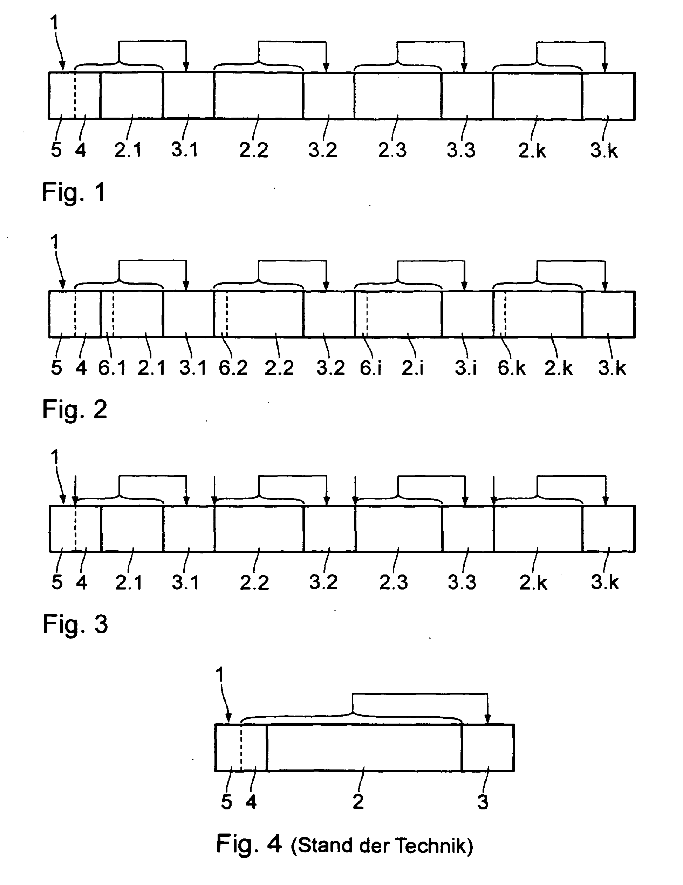

So ist es in der Nachrichtentechnik üblich, größere Datenmengen bei einer Datenübertragung aufzuteilen und in einzelnen sogenannten Telegrammen zu übertragen. Diese sind im Allgemeinen folgendermaßen strukturiert, wie sich aus der Fig. 4 erkennen lässt: Telegramme beginnen mit einem Telegrammkopf, üblicher Weise und im Folgenden mit Header 1 bezeichnet, welcher beispielsweise Informationen über die Telegrammlänge und die Adressierung enthält. Weiterhin muss der Header 1 in aller Regel Informationen, welche die Aufteilung der größeren Datenmenge in einzelne Telegramme betreffen, enthalten. Der Header 1 beginnt häufig mit einer immer gleichen Einleitungssequenz, einer Präambel. Auf den Header 1 folgen dann die eigentlichen Nutzdaten, die in einem Nutzdatenblock 2 angeordnet sind. Um etwaige Übertragungsfehler bei der Übertragung des Telegramms erkennen zu können, schließt eine Prüfsumme im Prüfsummenblock 3 die Telegramme ab. In diesen Prüfsummen-Verfahren zur Datensicherung in einem seriellen Kommunikationsprotokoll werden für die Prüfsummenberechnung konstante Startwerte verwendet. Null oder Eins sind übliche Werte. Sender und Empfänger müssen natürlich die gleichen Startwerte verwenden. Bei dem sogenannten Ethernet-Standard wird beispielsweise ein als CRC32 bekannter Prüfsummenalgorithmus verwendet, welcher in der Fachveröffentlichung "IEEE Standard for information technology - Part 3: Carrier sense multiple access with collision detection (CSMA/CD) access method and physical layer specifications", IEEE Std 802.3™-2005 (im Folgenden "IEEE 802.3") beschrieben ist. Die Prüfsumme wird über den veränderlichen Teil des Headers 1 und die Nutzdaten im Block 2 berechnet.

Die Übertragungssicherheit, welche mit dieser allgemeinen Struktur erreicht werden kann, hängt nun von der Telegrammlänge ab. Eine bekannte Untersuchung dazu ist in der Fachveröffentlichung von P. Koopman "32-Bit Cyclic Redundancy Codes for Internet Applications", Preprint of a regular paper to appear in "The International Conference on Dependable Systems and Networks (DSN)" 2002 (im Folgenden "Koopman") veröffentlicht worden. In dieser Arbeit wird der Zusammenhang zwischen Nachrichtenlänge und einer die Übertragungssicherheit repräsentierenden Größe, der sogenannten Hamming-Distanz untersucht. Die Nachrichtenlänge ist die Zahl der gesicherten Bits (ohne die CRC).

Koopman zeigt für das Polynom CRC-32 nach IEEE802.3 den Zusammenhang zwischen Nachrichtenlänge in Bits und erreichbarer Hamming-Distanz. Im Folgenden ist die Tabelle 1 aus Koopman in gekürzter Fassung wiedergegeben:

Tabelle 1: Hamming-Distanz von CRC-32 nach IEEE 802.3 in Abhängigkeit von der Nachrichtenlänge

| Hamming-Distanz | Nachrichtenlänge in Bits |
|---|---|
| 15 | 8-10 |
| 14 | - |
| 13 | - |
| 12 | 11-12 |
| 11 | 13-21 |
| 10 | 22-34 |
| 9 | 35-57 |
| 8 | 58-91 |
| 7 | 92-171 |
| 6 | 172-268 |
| 5 | 269-2974 |
| 4 | 2975-91607 |
| 3 | 91608-131072... |
| 2 | ... |

Zur Realisierung erhöhter Sicherheitsanforderungen wird eine höhere Hamming-Distanz benötigt. Wie aus Tabelle 1 ersichtlich, sinkt mit steigender Hamming-Distanz die übertragbare Nachrichtenlänge. Wenn beispielsweise eine Hamming-Distanz von 10 gefordert sein sollte, dann stehen maximal nur 34 Bits zur Verfügung, welche sowohl für die Adressierungsinformationen, die Telegrammlängeninformationen als auch für die Nutzdaten ausreichen müssen.

Um einen Zusammenhang zwischen einer gegebenen Sicherheitsanforderung und der Hamming-Distanz herstellen zu können, müssen die Restfehlerwahrscheinlichkeit R und die Übertragungsfehlerrate A berechnet werden.

Nach GS-ET-26: "Grundsatz für die Prüfung und Zertifizierung von Bussystemen für die Übertragung sicherheitsrelevanter Nachrichten", HVBG, Gustav-Heinemann-Ufer 130, D-50968 Köln, Ausgabe Mai 2002 (im Folgenden "GS-ET-26") Kap. 3.6.1.2 und Normen-Entwurf "Digitale Datenkommunikation in der Leittechnik - Teil 3: Profile für funktional sichere Kommunikation in industriellen Netzwerken (IEC 65C/351/CD: 2004)", Juli 2005, (im Folgenden "DIN IEC 61784-3") Kap. 5.7.2 gilt für die Restfehlerwahrscheinlichkeit R:

$$R(p) = \sum_{e=d}^{n} A_{n,e} p^e (1-p)^{(n-e)}$$

mit

$$A_{n,e} = \binom{n}{e} = \frac{n!}{e!(n-e)!}$$

n    Nachrichtenlänge in Bit
p    Bitfehlerwahrscheinlichkeit
d    Hamming-Distanz des realisierten Datensicherungsmecha- nismus

Die aus $R(p)$ resultierenden Fehler pro Zeit (Übertragungsfehlerrate A) lassen sich mit folgendem Ansatz bestimmen:

$$\Lambda = 3600 \cdot R(p) \cdot \nu \cdot (m-1) \cdot 100$$

mit

$\nu$    Anzahl sicherheitsrelevanter Nachrichten/s
$R(p)$    siehe oben
(m-1)    Worst-Case-Zahl der Übertragungen bei m Teilnehmern. Da ein Bussystem frei projektierbar ist, muss die maximale Aus- baustufe angenommen werden.
100    Der Faktor 100 besagt, dass die Übertragung nur zu 1 % zur Sicherheitsfunktion beiträgt.
A    Übertragungsfehlerrate, d.h. Übertragungsfehler/Stunde

Der Zusammenhang zwischen der für die Erfassung der funktionalen Sicherheit technischer Gerätschaften definierten SIL-Klasse und der Übertragungsfehlerrate A ist nach GS-ET-26 und DIN IEC 61784-3 der folgenden Tabelle 2 entnehmbar:

Tabelle 2: Zusammenhang zwischen Übertragungsfehlern pro Stunde und SIL-Klasse

| SIL | A |
|-----|----------|
| 3 | $< 10^{-7}$ |
| 2 | $< 10^{-6}$ |
| 1 | $< 10^{-5}$ |

Der Nachteil der Prüfsummensicherungsver-fahren nach dem Stand der Technik besteht darin, dass bei erhöhten Anforderungen an die Übertragungssicherheit die Nutzdatenlänge gegen Null geht. Damit steigt die Anzahl der zur Übertragung einer bestimmten Datenmenge benötigten Telegramme stark an.

Im Prinzip ließe sich das Problem durch die Verwendung von noch aufwändigeren CRC-Prüfsummenverfahren, beispielsweise mit 64 Bit, lösen. Der Nachweis der erreichbaren Hamming-Distanz ist allerdings extrem schwierig, Untersuchungen dazu sind nicht bekannt. Ein solcher Nachweis wird aber für Sicherheitsanwendungen gefordert. Daher muss auf die bekannten Prüfsummenverfahren mit nachgewiesener Hamming-Distanz zurückgegriffen werden.

Die EP 1 499 024 zeigt grundsätzlich in der Figur 37 in Verbindung mit den Abschnitten [0140] und [0141] die Segmentierung eines Nutzdaten-Strings in eine Vielzahl von Segmenten, die jeweils durch eine Checksumme (CRC) abgeschlossen sind. Das bekannte Verfahren gemäß dieser Druckschrift setzt sich dabei zum Ziel, die für die CRC-Prüfsummenberechnung notwendige Zeit zu verringern.

Das offenbarte Verfahren zielt also auf eine schnelle CRC-Berechnung ab, was durch eine zeitlich parallele Abarbeitung der einzelnen Nutzdatensegmente und die Zuweisung von Einzel-CRCs zu diesen Blöcken erreicht wird.

Der Fachartikel von Blome W. et al: "Feldbus-Protokolle im Vergleich. Enorme Unterschiede in der Effizienz" aus Elektronik, WK-Fachzeitschriftenverlag, Poing, DE, Band 43, Nummer 1/11.01.1994, Seiten 48 bis 50 und 55 sind grundsätzliche Strukturen von Datentelegrammen bekannt.

Der Erfindung liegt die Aufgabe zu Grunde, ein Verfahren zur telegrammweisen Datenübertragung in einem seriellen Kommunikationsprotokoll anzugeben, mit dessen Hilfe unter Verwendung von CRC-Prüfsummenverfahren mit nachgewiesener, insbesondere hoher Hamming-Distanz eine beliebige Nutzdatenlänge in einem Telegramm erreichbar wird, wobei gleichzeitig in besonders geschickter Weise ein Abschnittszähler innerhalb des zu übertragenen Datentelegramms erreicht werden soll.

Diese Aufgabe wird durch die im Anspruch 1 angegebenen Merkmale gelöst, wonach der Nutzdatenblock eines Telegramms in mehrere Nutzdaten-Unterblöcke unterteilt wird, die jeweils separat durch Prüfsummen-Unterblöcke mit der entsprechend nachgewiesenen Hamming-Distanz gesichert werden, und wonach ein Startwert für die Ermittlung der Prüfsumme eines jeweiligen Prüfsummen-Unterblocks in Abhängigkeit der Position des davon jeweils gesicherten Nutzdaten-Unterblocks innerhalb des Telegramms gesetzt wird.

Erfindungsgemäß wird der Prüfsummenstartwert bei jedem Abschnitt des Telegramms systematisch geändert. Dadurch wird die Funktion eines Abschnittszählers implizit realisiert, ohne dass dafür ein Byte übertragen werden muss. Eine Prüfung der Abschnitte durch den Empfänger ist möglich, wenn ihm die Systematik der Startwert-Änderung bekannt ist. Die Abschnitte sind damit in der Checksumme indirekt markiert und bekommen eine eindeutige Position im Telegramm.

Erfindungsgemäß werden die Telegramme jeweils von mehr als einer CRC-Prüfsumme gesichert. Jedes Telegramm zerfällt dann logisch gesehen in mehrere, einzeln durch eine CRC-Prüfsumme gesicherte Abschnitte.

Ein Vorteil der Erfindung liegt darin, dass relativ einfache CRC-Prüfsummenalgorithmen mit bekannter Hamming-Distanz auch bei anspruchsvollen Sicherheitsanforderungen zur Übertragung beliebig großer Nutzdatenmengen verwendet werden können. Gegenüber den bekannten Sicherungsverfahren wird der Übertragungskanal weniger stark durch die Übertragung der Header-Informationen belastet. Der Vorteil ist insbesondere dann besonders groß, wenn die durch die Prüfsumme gesicherte Nachrichtenlänge n klein ist. Das ist insbesondere bei hohen Anforderungen an die Hamming-Distanz der Fall, wie oben Tabelle 1 zeigt.

In den abhängigen Ansprüchen sind bevorzugte Weiterbildungen des erfindungsgemäßen Verfahrens angegeben. So ist bei einer Ausgestaltung gemäß Anspruch 2 die Information über die Telegrammlänge weiterhin im gesicherten Teil des Header enthalten. Gemäß Anspruch 3 können die einzelnen Prüfsummen-Unterblöcke zwischen den Nutzdaten-Unterblöcken beispielsweise in festen Abständen platziert werden. Die Länge des letzten Nutzdaten-Unterblockes kann dann auch kleiner als die fest vorgegebene Länge der anderen Nutzdaten-Unterblöcke sein.

Es ist aber auch möglich (Anspruch 4), die Prüfsummen-Unterblöcke separat an anderer Stelle im Telegramm, z.B. gesammelt an den Anfang oder das Ende der Nutzdaten-Unterblöcke zu stellen. Das heißt, die Positionen der Prüfsummen-Unterblöcke innerhalb des Telegramms können verschieden gewählt werden.

Eine nicht in einem abhängigen Anspruch gesondert erwähnte Alternative liegt darin, auf die Übertragung der Telegrammlänge im Header zu verzichten und mit einer starren Telegrammlänge zu arbeiten. Dies kann bei speziellen Anwendungen mit konstanter Telegrammlänge sinnvoll sein.

Die Erfindung bezieht sich schließlich auch auf eine Datenübertragungsvorrichtung und insbesondere eine kontaktlos arbeitende Datenübertragungsvorrichtung in Mess-Systemen, die herkömmlicherweise eine senderseitige Datenaufbereitungseinrichtung zur Anordnung der zu übertragenden Daten in Telegrammen, eine Datensendeeinheit, eine dieser nachgeordnete Datenübertragungsstrecke zur Weiterleitung der von der Datensendeeinheit ausgesandten Datentelegramme, eine dieser nachgeordnete Datenempfangseinheit zum Empfang der Datentelegramme und eine Datenauswerteeinrichtung zur weiteren Verarbeitung der Datentelegramme umfasst. Erfindungsgemäß sind laut Kennzeichnungsteil des Anspruchs 5 die Datenaufbereitungs- und Datenauswertungseinrichtung derart ausgelegt, dass eine telegrammweise Datenübertragung gemäß dem erfindungsgemäßen Verfahren erfolgt.

Gemäß einer bevorzugten Ausführungsform, wie sie Anspruch 6 wiedergibt, kann die Datenübertragungsvorrichtung mit einer Datensendeeinheit, Datenübertragungsstrecke und Datenempfangseinheit in Form einer induktiven kontaktlosen Steckverbindung ausgebildet sein. Diese kann vorzugsweise zur Datenübertragung in Mess-Systemen zwischen einem Mess-Sensor und einem Messgerät, insbesondere zwischen einem pH-Mess-Sensor und einem entsprechenden Feldgerät ausgelegt sein.

Weitere Merkmale, Einzelheiten und Vorteile ergeben sich aus der nachfolgenden Beschreibung, in der Ausführungsbeispiele des Datenübertragungsverfahrens und einer dieses umsetzenden pH-Messeinrichtung anhand der beigefügten Zeichnungen näher erläutert werden. Es zeigen:

Fig. 1    eine schematische Darstellung eines abschnittsweise gesicherten Datentelegramms,

Fig. 2    eine schematische Darstellung eines abschnittsweise gesicherten Telegramms mit Abschnittszählern,

Fig. 3    eine schematische Darstellung eines abschnittsweise gesicherten Datentelegramms mit variablem Prüfsummenstartwert,

Fig. 4    eine grundlegende Darstellung eines gesicherten Ethernet- Datentelegramms (Stand der Technik), und

Fig. 5    eine schematisches Schaubild eines pH-Mess-Systems mit gesicher- ter Datenübertragungsvorrichtung.

Ein zur telegrammweisen Datenübertragung verwendetes, abschnittsweise gesichertes Datentelegramm ist anhand von Fig. 1 zu erläutern. Es weist einen Telegrammkopf, im Folgenden Header 1 auf, der in der Regel eine von Telegramm zu Telegramm unveränderte Einleitungssequenz 5 und ein veränderliches Headerteil 4 aufweist, in dem beispielsweise Informationen über die Telegrammlänge und die Adressierung enthalten sind. Dem Header 1 folgen Nutzdaten-Unterblöcke 2.1 bis 2.k, die jeweils von Prüfsummen-Unterblöcken 3.1 bis 3.k abgesichert sind. In den Prüfsummen-Unterblöcken 3.1 bis 3.k sind jeweils durch den Prüfsummenalgorithmus CRC32 ermittelte Prüfsummen mit nachgewiesener Hamming-Distanz abgelegt. Die Prüfsumme im ersten Prüfsummen-Unterblock 3.1 umfasst dabei auch die im veränderlichen Headerteil 4 enthaltenen Daten. Die Nutzdaten-Unterblöcke 2.1 bis 2.k-1 weisen feste Längen auf, der letzte Nutzdaten-Unterblock 2.k kann entsprechend der verbleibenden Datenmenge kleiner sein.

Ein abschnittsweise gesichertes Telegramm mit Abschnittszählern ist anhand von Fig. 2 zu erläutern.

Dieses Telegramm beginnt wiederum mit einem Header 1 mit Einleitungssequenz 5 und veränderlichem Headerteil 4. Jeder Nutzdatenblock 2.1 bis 2.k wird im Unterschied zum Telegramm gemäß Fig. 1 nun mit einem Zählwert 6.1 bis 6.k der Werte 1 bis k eingeleitet. Die jedem so ausgebildeten Nutzdaten-Unterblock 2.1 bis 2.k jeweils folgenden Prüfsummen-Unterblöcke 3.1 bis 3.k enthalten wiederum eine nach dem Prüfsummenalgorithmus CRC32 ermittelte Prüfsumme, die so auch die jeweiligen Zählwerte 6.1 bis 6.k mit absichert. Dadurch wird ein abschnittsweise gesichertes Telegramm mit hoher Hamming-Distanz gebildet, das eine beliebige Nutzdatenlänge aufweisen kann und gegen einen Verlust und Vertauschen kompletter Abschnitte abgesichert ist. Es ist im Übrigen zu erwähnen, dass die den jeweiligen Abschnitt repräsentierenden Zählwerte 6.1 bis 6.k nicht unbedingt am Anfang eines jeden Nutzdaten-Unterblocks 2.1 bis 2.k stehen müssen. Vielmehr können Sie an beliebiger Stelle innerhalb der Nutzdaten-Unterblöcke 2.1 bis 2.k positioniert sein.

Die Einschränkung der Nutzdatenlänge durch den jeweiligen Zählwert 6.1 bis 6.k wird bei dem abschnittsweise gesicherten Telegramm mit variablem Prüfsummenstartwert gemäß Fig. 3 vermieden. Dort wird in der einfachsten Ausgestaltung dieses Telegramms mit einem variablen Prüfsummenstartwert ein virtueller Abschnittszähler implementiert. Für den i-ten Prüfsummen-Unterblock 3.i wird jeweils die Zahl i als Startwert für den Prüfsummenalgorithmus verwendet, wobei i die Ordinalzahlen von 1 bis k durchläuft. Da der Empfänger des Telegramms diese Routine bei der Prüfsummen-Abfrage ebenfalls verwendet, kann über den virtuellen Abschnittszähler dennoch eine Sicherung gegen Verlust oder Vertauschen von Abschnitten erreicht werden. Dabei wird jedoch gegenüber dem abschnittsweise gesicherten Telegramm mit Abschnittszähler gemäß Fig. 2 mindestens ein Byte pro Nutzdaten-Unterblock 2.1 bis 2.k eingespart.

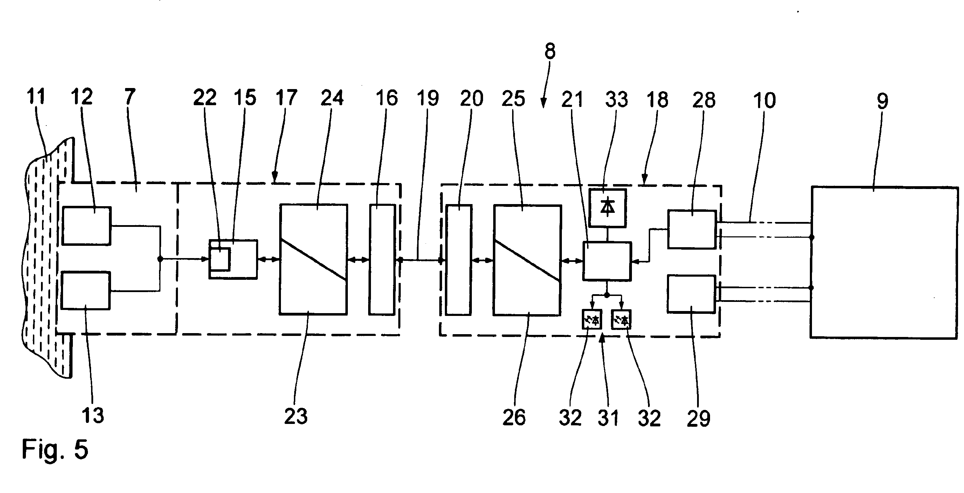

Anhand der Fig. 5 ist der funktionale Aufbau einer Datenübertragungsvorrichtung 8, die die vorstehend erläuterten Datenübertragungsverfahren nutzen kann, am Beispiel eines zur Anbindung einer Sensoreinrichtung 7 dienenden Steckverbindungssystems mit dem Steckerelement 17 und dem Buchsenelement 18 zu erläutern. So weist die Sensoreinrichtung 7 beispielsweise einen Elementarsensor 12 zur Erfassung eines pH-Wertes und/oder eines Redox-Potentials einer Prozessflüssigkeit 11 und einen Elementarsensor 13 zur Erfassung der Temperatur der Prozessflüssigkeit auf. Beide Sensoren 12, 13 liefern jeweils ein analoges Spannungssignal, das an den signaltechnisch angekoppelten AD-Wandler 22 als Datenaufbereitungseinrichtung im Steckerelement 17 gegeben wird. Letzterer ist in einen Mikrocontroller 15 integriert, der als zentrale Steuer- und Speichereinheit für die grundsätzliche Steuerung, die Verarbeitung von Befehls- und Messdaten und deren Weitergabe in bekannter Weise funktional zuständig ist und somit als Datenaufbereitungseinrichtung im Sinne der Erfindung fungiert.

Im Steckerelement 17 ist ferner ein Schaltungskomplex mit Energiesignalempfänger 23 und Daten-Modulator-Demodulator-Einheit 24 sowie ein erstes Koppelpartnerelement 16 zumindest als Datensendeeinheit für die induktive kontaktlose Koppelstrecke 19 als Datenübertragungsstrecke zwischen Steckerelement 17 und Buchsenelement 18 vorgesehen.

Das zweite Koppelpartnerelement 20 dient zumindest als Datenempfangseinheit und ist kopfseitig am Buchsenelement 18 angeordnet. Es steht mit einem Schaltungskomplex aus Energiesignalsender 25 und Modulator-Demodulator-Einheit 26 in Verbindung. Analog dem Steckerelement 17 übernimmt auch im Buchsenelement 18 ein Mikrocontroller 21 die zentralen Steuer- und Speicherausgaben im Zusammenhang mit der Energieversorgung und dem Datenaustausch des Steckverbindungssystems und dient somit als Datenauswerteeinrichtung im Sinne der Erfmdung. Der Datenaustausch erfolgt über ein RS 485-Modem als Datenschnittstelle 28 zu einem Profibus-Feldgerät 9, das über ein Kabel 10 an das Buchsenelement 18 angebunden ist. Schließlich ist die gesamte Steckverbindungseinheit über eine Primärstromversorgung 29 mit Energie versorgt. Das gesamte Steckverbindungssystem mit der Sensoreinrichtung 7 genügt den Explosionsschutzbestimmungen.

Im Buchsenelement 18 ist schließlich eine als Ganzes mit 31 bezeichnete optische Diagnose-Anzeigeeinheit vorgesehen, die vom Mikrocontroller 21 angesteuert wird und im hier gezeigten Ausführungsbeispiel drei Leuchtdioden 32, 33 umfasst. Diese dienen zur Visualisierung von Zustandsparametem innerhalb des Mess- und Übertragungssystems.

Es soll kurz die grundsätzliche Funktionsweise des Steckverbindungssystems, wie sie an sich aus dem Stand der Technik bekannt ist, umrissen werden. Ausgehend von der Sensorseite werden die von den beiden Elementarsensoren 12, 13 gelieferten Analogsignale im AD-Wandler 22 digitalisiert. Der Mikrocontroller 15 errechnet die entsprechenden Messwerte und gibt diese auf das den Energiesignalempfänger 23 und die Modulator-Demodulator-Einheit 24 realisierende Schaltungsteil aus. Dieses setzt die Digitalinformationen über die Messwerte in eine für die Übertragung über die induktive Koppelstrecke 19 geeignete Modulation um, wofür beispielsweise eine Ampliduden-, Frequenz- oder Phasenmodulation in Frage kommen. Dabei kommen die eingangs erläuterten Datentelegramme im Sinne des erfindungsgemäßen Verfahrens zum Einsatz. Auf der Seite des Buchsenelements 18 werden die entsprechenden Digitalinformationen von der Modulator-Demodulator-Einheit 26 herausgefiltert, vom Mikrocontroller 21 als Datenauswerteeinrichtung aufbereitet und über die Datenschnittstelle 28 sowie die Busleitung im Kabel 10 an das Feldgerät 9 zur Weiterverarbeitung übermittelt. Der Mikrocontroller 21 steuert dabei den Datenfluss, indem er beispielsweise die Datenschnittstelle 28 von Empfangen auf Senden schaltet.

Zur Spannungsversorgung des gesamten Steckverbindungssystems wird ausgehend von der basisseitigen Primärstromversorgung 29 über den Mikrocontroller 21 der Energiesignalsender 25 mit Modulator-Demodulator-Einheit 26 so gesteuert, dass über die Koppelstrecke 19 neben aufmodulierten Datensignalen, wie sie beispielsweise zur Parametrisierung der Sensoreinrichtung 7 dienen, auch Energieversorgungssignale, also beispielsweise eine Trägerspannung übertragen werden. Diese wird vom Energiesignalempfänger 23 mit Modulator-Demodulator-Einheit 24 so aufbereitet, dass daraus die gesamte Spannungsversorgung der Komponenten im Steckerelement 17 realisiert werden kann.

Das gezeigte induktive Stecksystem realisiert also eine kontaktlose Steckverbindung zwischen Sensor 7 und Kabel 10. Es ermöglicht eine sichere pH-Messung ohne Beeinflussung durch Umgebungsbedingungen, weil zahlreiche Störanfälligkeiten kontaktbehafteter Stecksysteme durch Feuchtigkeit, Verschmutzung oder Korrosion ausgeschaltet werden. Das System verhindert zuverlässig die Verkopplung von Mediums- und Messumformerpotential.

Das induktive Stecksystem hat außerdem weitere Vorzüge. Ein Charakteristikum des Systems ist die Digitalisierung der Messsignale bereits im Sensor, so dass die Signalweiterleitung digital erfolgen kann. Dadurch können neben dem gewöhnlichen Messsignal auch weitere Informationen, beispielsweise über den Sensortyp, die Seriennummer oder die Kalibrierdaten, enthalten sein. Somit kann automatisch sichergestellt werden, dass die Geräteparametrierung und die Kalibrierdaten immer zum Sensor 7 passen. Die Betriebssicherheit wird dadurch wesentlich erhöht, was bei Messstellen mit SIL-Anforderungen von Bedeutung ist. Auch Informationen über Belastungen des Sensors 7 durch extreme Umgebungsbedingungen, wie z. B. hohe Temperaturen, können enthalten sein und nach der Übertragung zum Messgerät für eine vorausschauende Wartung ausgewertet werden.

Die kontaktlose Steckverbindung kann im Übrigen für beliebige Sensoren verwendet werden. Der pH-Sensor 7 versteht sich insofern als eine beispielhafte Ausprägung.

Die Signalweiterleitung erfolgt beim induktiven Stecksystem digital. Zur Datenübertragung wird ein eigenes Protokoll verwendet. Die zu übertragenden Sensordaten werden seriell zwischen Sensor 7 und Feldgerät 9 übertragen. Es ergeben sich relativ große Datenmengen aus der Forderung, verschiedenste Informationen im Steckerelement 17 des Sensors 7 abzuspeichern. Dies können, wie oben erwähnt, Herstellerinformationen über den Sensor 7, wie Seriennummern, Typbezeichnungen oder eine Herstellerkodierung sein. Es kann sich bei diesen im Sensor 7 abgespeicherten Informationen aber auch um Kalibrierdaten handeln. Weiterhin ist es möglich, dass im Sensor 7 Informationen über den Sensorverschleiß gespeichert sind.

Das System soll unter SIL-Anforderungen eingesetzt werden können. Die kontaktlose, induktive Datenübertragung führt allerdings zu einer relativ schlechten Annahme über die maximale Bitfehlerwahrscheinlichkeit. Die kontaktlose, induktive Datenübertragung ist hinsichtlich der Bitfehlerwahrscheinlichkeit zwischen einer Funkverbindung und einem ungeschirmten Telefonkabel einzustufen.

Zum Erreichen einer bestimmten Sicherheitskategorie sind entsprechende Datensicherungsmaßnahmen notwendig, mit welchen die Restfehlerwahrscheinlichkeit R auf eine Übertragungsfehlerrate A entsprechend Tabelle 2 reduziert werden kann. Rechnungen mit den oben angeführten Formeln zeigen, dass eine Hamming-Distanz von 10 nachgewiesen werden muss. Aufgrund der oben dargelegten Argumentation ist es dann nicht möglich, mehr als 4 Byte mit der CRC-32-Prüfsumme zu sichern. Davon wird mindestens ein Byte des Headers 1 als "Bytecount" für die Übermittlung der Nutzdatenlänge benötigt.

Um die bis zu 255 Byte des Sensors 7 nach dem Stand der Technik zu übertragen, wäre eine Aufteilung in einzelne Telegramme mit jeweils einem eigenen Header 1 notwendig. Dieser müsste neben dem Byte für den Bytecount mindestens ein weiteres Byte für einen Telegrammzähler enthalten, um die einzelnen Telegramme später wieder zusammenbauen zu können. Somit verblieben für die Nutzdaten innerhalb eines Telegramms maximal 2 Byte. Es wären damit für die Übertragung von 255 Byte insgesamt 128 Telegramme zu versenden. Insgesamt wären 1023 Byte zu übermitteln. Würde zudem jedes Telegramm, wie oft üblich, durch eine Präambel mit y Präambelbytes eingeleitet, so würde sich die insgesamt zu übertragende Informationsmenge noch um 128*y Byte erhöhen.

Mit dem erfindungsgemäßen Datensicherungsverfahren des abschnittsweise gesicherten Telegramms mit variablem Checksummenstartwert (siehe Fig. 4 mit Beschreibung) können die maximal 255 Byte Nutzdaten in einem einzigen Telegramm mit nur 64 Abschnitten übertragen werden. Der erste Abschnitt enthält den Header 1 mit mindestens einem Byte für die Telegrammlänge, sowie maximal 3 Byte Nutzdaten, und wird durch eine Prüfsumme mit 32 Bit gesichert. Die weiteren Abschnitte enthalten jeweils 4 Byte Nutzdaten und werden gleichermaßen gesichert. Der letzte Abschnitt kann mit 1 Byte Nutzdaten und 4 Byte Prüfsumme kürzer sein. Insgesamt werden nur 512 Byte für die Übertragung benötigt. Wird eine Präambel mit y Byte verwendet, erhöht sich die insgesamt zu übertragende Informationsmenge nur um diese y Präambelbytes.

Der Vergleich zwischen dem Stand der Technik und dem erfindungsgemäßen Verfahren ergibt für das Ausführungsbeispiel der pH-Messung mit induktiver, kontaktloser Steckverbindung unter SIL-Anforderungen einen klaren Vorteil des erfindungsgemäßen Verfahrens. Zur sicheren Übertragung von 255 Byte Sensordaten müssten nach dem Stand der Technik wie oben erläutert 1023 Byte übertragen werden, mit dem erfindungsgemäßen Verfahren müssen nur 512 Byte übertragen werden.

**Patentansprüche**

1. Verfahren zur telegrammweisen Datenübertragung in einem seriellen Kommunikationsprotokoll mit folgenden Verfahrensschritten:

   - Zuordnen der zu übertragenden Nutzdaten zu Telegrammen, deren Basisstruktur aufweist

      = einen Telegrammkopf (1) mit Informationsdaten über die Telegrammlänge, Adressierung, Aufteilung der zu übertragenden Nutzdaten auf mehrere Telegramme oder dergleichen,
      = einen Nutzdatenblock (2) mit zumindest einem Teil der zu übertragenden Nutzdaten, und
      = einen Prüfsummenblock (3) mit einer zumindest aus den Nutzdaten nach einem Prüfsummenalgorithmus ermittelten Prüfsumme, sowie

   - zeitlich aufeinanderfolgende Übertragung der Telegramme über eine Datenübertragungsstrecke (19),
   - wobei der Nutzdatenblock (2) der Telegramme in mehrere Nutzdaten-Unterblöcke (2.1 bis 2.k) unterteilt wird, die jeweils separat durch Prüfsummen-Unterblöcke (3.1 bis 3.k) gesichert werden, **dadurch gekennzeichnet, dass** ein Startwert (6.1 bis 6.k) für die Ermittlung der Prüfsumme eines jeweiligen Prüfsummen-Unterblocks (3.1 bis 3.k) in Abhängigkeit der Position des davon jeweils gesicherten Nutzdaten-Unterblocks (2.1 bis 2.k) innerhalb des Telegramms gesetzt wird.

2. Verfahren nach Anspruch 1, **dadurch gekennzeichnet, dass** die Prüfsummenermittlung unter Einbeziehung der im Telegrammkopf (1) enthaltenen Informationsdaten über die Telegrammlänge erfolgt.

3. Verfahren nach Anspruch 1 oder 2, **dadurch gekennzeichnet, dass** jedem Nutzdaten-Unterblock (2.1 bis 2.k) ein diesen sichernder Prüfsummen-Unterblock (3.1 bis 3.k) folgt.

4. Verfahren nach Anspruch 1 oder 2, **dadurch gekennzeichnet, dass** die Prüfsummen-Unterblöcke (3.1 bis 3.k) für die einzelnen Nutzdaten-Unterblöcke (2.1 bis 2.k) davon separat an definierter Position innerhalb des Telegramms, vorzugsweise vor oder hinter den aneinandergereihten Nutzdaten-Unterblöcken (2.1 bis 2.k), angeordnet sind.

5. Datenübertragungsvorrichtung, insbesondere kontaktlos arbeitende Datenübertragungsvorrichtung in Mess-Systemen, umfassend

   - eine senderseitige Datenaufbereitungseinrichtung (15) zur Anordnung der zu übertragenden Daten in Telegrammen,
   - eine Datensendeeinheit (16),
   - eine dieser nachgeordnete Datenübertragungsstrecke (19) zur Weiterleitung der von der Datensendeeinheit (16) ausgesandten Datentelegramme,
   - eine dieser nachgeordnete Datenempfangseinheit (20) zum Empfang der Datentelegramme, und
   - eine Datenauswerteeinrichtung (21) zur weiteren Verarbeitung der Datentelegramm, und
   - eine Auslegung der Datenaufbereitungs- und Datenauswerteeinrichtung (15; 21) derart, dass eine telegrammweise Datenübertragung in einem seriellen Kommunikationsprotokoll mit folgenden Verfahrensschritten erfolgt:
   - Zuordnen der zu übertragenden Nutzdaten zu Telegrammen, deren Basisstruktur aufweist

      = einen Telegrammkopf (1) mit Informationsdaten über die Telegrammlänge, Adressierung, Aufteilung der zu übertragenden Nutzdaten auf mehrere Telegramme oder dergleichen,
      = einen Nutzdatenblock (2) mit zumindest einem Teil der zu .übertragenden Nutzdaten, und
      = einen Prüfsummenblock (3) mit einer zumindest aus den Nutzdaten nach einem Prüfsummenalgorithmus ermittelten Prüfsumme, sowie

   - zeitlich aufeinanderfolgende Übertragung der Telegramme über eine Datenübertragungsstrecke (19),
   - wobei der Nutzdatenblock (2) der Telegramme in mehrere Nutzdaten-Unterblöcke (2.1 bis 2.k) unterteilt wird, die jeweils separat durch Prüfsummen-Unterblöcke (3.1 bis 3.k) gesichert werden, **dadurch gekennzeichnet, dass** ein Startwert (6.1 bis 6.k) für die Ermittlung der Prüfsumme eines jeweiligen Prüfsummen-Unterblocks (3.1 bis 3.k) in Abhängigkeit der Position des davon jeweils gesicherten Nutzdaten-Unterblocks (2.1 bis 2.k) innerhalb des Telegramms gesetzt wird.

6. Datenübertragungsvorrichtung nach Aupruch 5, **dadurch gekennzeichnet, dass** die Datensendeeinheit (16), Datenübertragungsstrecke (19) und Datenempfangseinheit (20) als induktive kontaktlose Steckvebindung ausgebildet sind.

7. Datenübertragungsvorrichtung nach Anspruch 5 oder 6, **dadurch gekennzeichnet, dass** sie zur Datenübertragung in Mess-Systemen zwischen einem Mess-Sensor (7) und einem Messgerät, insbesondere Messumformer (9) ausgelegt ist.

8. Datenübertragungsvorrichtung nach Anspruch 7, **dadurch gekennzeichnet, dass** die Datenaufbereitungseinrichtung (15) einem pH-Mess-Sensor (7) zugeordnet ist.

## Claims

1. Method for data transmission in telegrams in a serial communication protocol comprising the following steps:

    - assigning the user data to be transmitted to telegrams, the basic structure of which comprising

        = a telegram header (1) which includes information data concerning the telegram length, addressing, distribution of the user data to be transmitted in several telegrams or the like;
        = a user data block (2) which includes at least a part of the user data to be transmitted; and
        = a checksum block (3) which includes a checksum that is determined at least on the basis of the user data according to a checksum algorithm; and

    - transmission of the telegrams in consecutive intervals along a data transmission path (19),
    - wherein the user data block (2) of the telegrams is divided into several user data sub-blocks (2.1 to 2.k), each of which being protected separately by checksum sub-blocks (3.1 to 3.k), **characterized in that** an initial value (6.1 to 6.k) is set for the determination of the checksum of a respective checksum sub-block (3.1 to 3.k) in dependence of the telegram position of the user data sub-block (2.1 to 2.k) protected thereby.

2. Method according to claim 1, **characterized in that** the checksum determination takes place by means of the information data about the telegram length contained in the telegram header (1).

3. Method according to claim 1 or 2, **characterized in that** each user data sub-block (2.1 to 2.k) is followed by a checksum sub-block (3.1 to 3.k) which protects the former.

4. Method according to claim 1 or 2, **characterized in that** the checksum sub-blocks (3.1 to 3.k) for the individual user data sub-blocks (2.1 to 2.k) thereof are arranged separately at a defined position in the telegram, preferably upstream or downstream of the successive user data sub-blocks (2.1 to 2.k).

5. Data transmission device, in particular contactless data transmission device in measuring systems, comprising

    - a data preparation device (15) on the side of the sender for arrangement of the data to be transmitted in telegrams;
    - a data transmission unit (16);
    - a data transmission path (19) disposed downstream thereof for transmission of the data telegrams emitted by the data sender unit (16);
    - a data receiver unit (20) disposed downstream thereof for receiving the data telegrams; and
    - a data evaluation device (21) for further processing of the data telegrams; and
    - a design of the data preparation and data evaluation devices (15; 21) such that a data transmission in telegrams takes place in a serial communication protocol comprising the following steps:
    - assigning the user data to be transmitted to telegrams, the basic structure of which comprising

        = a telegram header (1) which includes information data concerning the telegram length, addressing, distribution of the user data to be transmitted in several telegrams or the like;
        = a user data block (2) which includes at least a part of the user data to be transmitted; and
        = a checksum block (3) which includes a checksum that is determined at least on the basis of the user data according to a checksum algorithm; and

    - transmission of the telegrams in consecutive intervals along a data transmission path (19),
    - wherein the user data block (2) of the telegrams is divided into several user data sub-blocks (2.1 to 2.k), each of which being protected separately by checksum sub-blocks (3.1 to 3.k), , **characterized in that** an initial value (6.1 to 6.k) is set for the determination of the checksum of a respective checksum sub-block (3.1 to 3.k) in dependence of the telegram position of the user data sub-block (2.1 to 2.k) protected thereby.

**6.** Data transmission device according to claim 5, **characterized in that** the data sender unit (16), data transmission path (19) and data receiver unit (20) are designed as an inductive contactless plug connection.

**7.** Data transmission device according to claim 5 or 6, **characterized in that** it is designed for data transmission in measuring systems between a measuring sensor (7) and a measuring device, in particular a measuring transducer (9).

**8.** Data transmission device according to claim 7, **characterized in that** the data preparation device (15) is assigned to a pH measuring sensor (7).

**Revendications**

**1.** Procédé de transmission des données par télégramme dans un protocole de communication série comprenant les étapes de procédé suivantes :

- le classement des données d'utilisation à transmettre par télégramme dont la structure de base présente

-- une en-tête de télégramme (1) comprenant des données informatives concernant la taille du télégramme, l'adressage, la mise en page des données d'utilisation à transmettre en plusieurs télégrammes ou similaires,
-- un bloc de données d'utilisation (2) comprenant au moins une partie des données d'utilisation à transmettre, et
-- un bloc de sommes de contrôle (3) comprenant au moins la somme de contrôle établie à partir des données d'utilisation selon un algorithme de sommes de contrôle, ainsi que

- la transmission étalée dans le temps des télégrammes se suivant par l'intermédiaire d'une voie de transmission de données (19),
- le bloc de données d'utilisation (2) des télégrammes étant subdivisé en plusieurs blocs secondaires de données d'utilisation (2.1 à 2.k) qui sont, chacun, sécurisés séparément par des blocs secondaires de sommes de contrôle (3.1 à 3.k),

**caractérisé en ce qu'**une valeur de départ (6.1 à 6.k) pour l'établissement de la somme de contrôle d'un bloc secondaire de sommes de contrôle (3.1 à 3.k) donné, est fixée à l'intérieur du télégramme en fonction de la position du bloc secondaire des données d'utilisation (2.1 à 2.k) qui est sécurisé par lui.

**2.** Procédé selon la revendication 1 **caractérisé en ce que** l'établissement des sommes de contrôle est effectué en tenant compte des données d'informations concernant la taille du télégramme contenues dans l'en-tête du télégramme (1).

**3.** Procédé selon les revendications 1 ou 2 **caractérisé en ce que** chaque bloc secondaire de données d'utilisation (2.1 à 2.k) est suivi par un bloc secondaire de sommes de contrôle (3.1 à 3.k) le sécurisant.

**4.** Procédé selon les revendications 1 ou 2 **caractérisé en ce que** les blocs secondaires des sommes de contrôle (3.1 à 3.k) sont disposés, pour des blocs secondaires de données d'utilisation (2.1 à 2.k) individuels, séparés de ceux-ci dans une position définie à l'intérieur du télégramme, de préférence devant ou derrière les blocs secondaires des données d' utilisation (2.1 à 2.k) alignés les uns derrière les autres.

**5.** Dispositif de transmission de données, en particulier dispositif de transmission de données travaillant sans contact dans des systèmes de mesures, comprenant

- un dispositif de préparation de données (15) du côté de l'émetteur, pour l'arrangement des données à transmettre sous forme de télégrammes,
- une unité d'émission de données (16),
- une voie de transmission de données (19) la suivant pour la transmission des télégrammes de données émis par l'unité d'émission des données (16),
- une unité de réception (20), disposée après celle-ci, pour la réception des télégrammes de données, et
- un dispositif d'exploitation des données (21) pour un traitement ultérieur des télégrammes de données, et
- une interprétation du dispositif de préparation des données et du dispositif d'exploitation des données (15 ; 21) de telle sorte qu'une transmission de données par télégramme dans un protocole de communication série est effectuée, comprenant les étapes de procédé suivantes :
- le classement des données d'utilisation à transmettre par télégramme dont la structure de base présente

-- une en-tête de télégramme (1) comprenant des données informatives concernant la taille du télégramme, l'adressage, la mise en page des données d'utilisation à transmettre en plusieurs télégrammes ou similaires,
-- un bloc de données d'utilisation (2) comprenant au moins une partie des données d'utilisation à transmettre, et

-- un bloc de sommes de contrôle (3) comprenant au moins la somme de contrôle établie à partir des données d'utilisation selon un algorithme de sommes de contrôle, ainsi que

- la transmission étalée dans le temps des télégrammes se suivant par l'intermédiaire d'une voie de transmission de données (19),

- où le bloc de données d'utilisation (2) des télégrammes est subdivisé en plusieurs blocs secondaires de données d'utilisation (2.1 à 2.k) qui sont, chacun, sécurisés séparément par des blocs secondaires de sommes de contrôle (3.1 à 3.k),

**caractérisé en ce qu'**une valeur de départ (6.1 à 6.k) pour l'établissement de la somme de contrôle d'un bloc secondaire de sommes de contrôle (3.1 à 3.k) donné, est fixée à l'intérieur du télégramme en fonction de la position du bloc secondaire des données d'utilisation (2.1 à 2.k) qui est sécurisé par lui.

6. Dispositif de transmission de données selon la revendication 5 **caractérisé en ce que** l'unité d'émission de données (16), la voie de transmission des données (19) et l'unité de réception des données (20) sont conçues sous la forme d'une connexion inductive sans contact.

7. Dispositif de transmission de données selon les revendications 5 ou 6 **caractérisé en ce que** la transmission de données est interprétée par des systèmes de mesures entre un capteur de mesure (7) et un appareil de mesure, en particulier un convertisseur de mesures (9).

8. Dispositif de transmission de données selon la revendication 7 **caractérisé en ce que** le dispositif de préparation des données (15) est disposé avec un capteur de mesure de pH (7).

Fig. 1

Fig. 2

Fig. 3

Fig. 4 (Stand der Technik)

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   EP 1499024 A

**In der Beschreibung aufgeführte Nicht-Patentliteratur**

*   IEEE Standard for information technology - Part 3: Carrier sense multiple access with collision detection (CSMA/CD) access method and physical layer specifications. *IEEE Std 802.3,* 2005
*   Grundsatz für die Prüfung und Zertifizierung von Bussystemen für die Übertragung sicherheitsrelevanter Nachrichten. Mai 2002
*   Digitale Datenkommunikation in der Leittechnik - Teil 3: Profile für funktional sichere Kommunikation in industriellen Netzwerken (IEC 65C/351/CD:2004. DIN IEC 61784-3. Juli 2005
*   Feldbus-Protokolle im Vergleich. Enorme Unterschiede in der Effizienz. **BLOME W. et al.** Elektronik. WK-Fachzeitschriftenverlag, 11. Januar 1994, vol. 43, 48-5055